# EUROPEAN PATENT SPECIFICATION

(11) **EP 3 825 561 B1**
(45) Date of publication and mention of the grant of the patent: **15.07.2026**
(21) Application number: 19210165.7
(22) Date of filing: 19.11.2019
(51) Int. Cl.: F16B 13/02, F16B 13/06

(54) **EXPANSION ANCHOR**
SPREIZANKER
CHEVILLE À EXPANSION

(43) Date of publication of application: 26.05.2021
(73) Proprietor: Illinois Tool Works, Inc., Glenview, Illinois 60025 (US)
(72) Inventor: MARASCO, Jean-Paul, Glenview, IL 60025 (US); COUVREUR, Jerome, Glenview, IL 60025 (US)
(74) Representative: HGF

(56) References cited:
- EP-A1- 3 477 126
- US-A- 4 182 217

## Description

The present invention relates to an expansion anchor, in particular, but not exclusively, to an expansion anchor suitable for use in the construction sector for anchoring, such as for a load to a wall and/or for a load to a top of a surface.

### Background

Two different types of expansion anchor are currently known. A first type of expansion anchor consists of anchors made entirely of plastic, some of which are designed for anchoring to walls made of bricks with internal partitions defining internal cavities which are hollow or filled with low-density material, and/or walls made of a relatively friable or non-homogeneous materials, such as multi-layer walls, wall made of loose (i.e. not very compact) granular-concrete, and/or walls made of compact material and therefore having a high density, such as concrete walls or walls made of natural stone or solid bricks, or another high-density material.

These plastic expansion anchors are used in a wide range of applications, but their use is limited to the anchoring of loads having a relatively low weight. Plastic expansion anchors are unable to anchor loads having medium duty weight.

For this reason, a second type of anchor has been developed, which differs from the plastic expansion anchor essentially in that it includes a tubular body made of metal. The tubular body typically comprises a metal conduit with an anchoring tab. The anchor having the metal tubular body further comprises a conical body and a tightening screw. The conical body is attached at the end of the tightening screw. When in use, the screw is tightened which causes the conical body to move axially inside of the conduit. Wedges of the conical body are gradually urged or otherwise driven radially outwards between the anchoring tabs, moving them apart towards the inside wall of the hole in which the anchor is placed. The anchoring tabs are moved apart until they are positioned into abutment against the inside surface (i.e. hole) of the wall, securing the anchor into the hole in the wall using friction.

Although metal anchors of this type are designed to anchor loads to a greater extent compared to the plastic anchors, metal anchors are limited in that they are suitable for anchoring only to walls made of a compact material, such as, for example, concrete. Therefore, these anchors are usually not suitable for anchoring medium duty loads also to non-compact walls such as walls made of bricks, panels, or made of relatively friable or non-homogeneous material.

It would be desirable to provide an expansion anchor that can alleviate or mitigate one or more of the aforementioned problems. Particularly, it is an object of the invention to provide an expansion anchor which can be used for any type of wall, or at least which can be used for a greater range of applications. It is also an object of the invention to provide an expansion anchor which is capable of anchoring loads having an even higher weight. It is a further object of the invention to provide an expansion anchor that has an improved ease of use and installation. It is a yet further object of the invention to provide an expansion anchor having an improved retention or securing to a wall or surface.

An expansion anchor is known from EP 3 477 126 A1.

The present invention provides at least an alternative to expansion anchors of the prior art.

### Summary of the Invention

In accordance with the present invention there is provided an expansion anchor according to the appended claims.

According to an aspect of the present invention, there is provided an expansion anchor comprising a tubular sleeve having a longitudinal axis and comprising an expansion threaded portion at a distal end and a body portion at a proximal end and expansion tabs attached to the body portion and extending towards the distal end. The expansion anchor also comprises a tightening screw configured to move the expansion threaded portion along the longitudinal axis inside the expansion tabs so as to expand the tabs radially outwardly relative to the longitudinal axis. The expansion anchor comprises at least one deformable leg extending between and attached to the body portion and to the expansion portion of the tubular sleeve. The deformable leg comprises at least two coupled segments. The deformable leg comprises a distal segment attached to the expansion portion, and a proximal segment attached to the body portion. The movement of the expansion portion of the sleeve along the longitudinal axis causes either: one of the proximal or the distal segment of the deformable leg to get shorter in length in the direction of the longitudinal axis; or both the distal and proximal segments of the deformable leg to retain their length and to be radially outwardly displaced relative to the longitudinal axis.

By having at least on deformable leg having at least two coupled segments, as the tightening screw is tightened, the expansion threaded portion moves towards the body portion and causes the expansion anchor to operate in one of two ways. The mode of operation is suitable for different types of wall in which the expansion anchor is retained. Thus, the expansion anchor is not limited to certain uses in a specific type or density or compactness of wall structure, for example. That is, the expansion anchor can operate in an expansion mode or a locking mode depending on the type of wall in which the expansion anchor is retained, each operation mode being suitable for interlocking the expansion anchor with the wall. In the expansion mode, both the distal and proximal segments of the deformable leg retain their length and are configured to radially outwardly displace from the longitudinal axis. This mode of operation can be used, for example, when the internal cavity of the wall is hollow or filled with a low-density material. The expansion mode can be deployed when the expansion anchor is used in a thin wall or in a wall made of a relatively friable or non-homogeneous materials, such as multi-layer walls, or a wall having a low compactness and/or density. In the locking mode, one of the proximal or the distal segment of the deformable leg gets shorter in length. This is particularly advantageous because the expansion anchor can therefore also be used in thick walls and/or in walls that are made of compact material and therefore having a high density, such as concrete walls or walls made of natural stone or solid bricks, or another high-density material. The locking operation of the expansion anchor also retains the expansion anchor in the wall. Therefore the expansion anchor can be used to a wide variety of walls and surfaces, the walls or surfaces having different thicknesses and being made of different materials.

According to the invention, the one of the proximal or the distal segment of the deformable leg collapses to a shorter length in the direction of the longitudinal axis.

Advantageously in specific embodiments, the one of the proximal or the distal segment of the deformable leg collapses by folding into sub-segments.

Advantageously in some preferred embodiments, the shortening of the proximal or distal segment increases its radial thickness relative to the longitudinal axis which in turn causes the other of the proximal or distal segment to move radially outwardly relative to the longitudinal axis as the expansion portion moves along the longitudinal axis. Thus, one of the segments shortens while the other moves radially outwardly. This is particularly advantageous if the segments are located at different portions of the wall having different properties. One particular example which illustrates the benefit of this is when one of the proximal and distal segment is arranged in a wall, while the other is arranged outside of the wall. The segment within the wall shortens and is retained within the wall, while the other segment urges radially outward, further improving the retention of the expansion anchor.

Advantageously in some embodiments, the expansion threaded portion is frustoconical and tapered towards the proximal end of the tubular sleeve. Therefore, as the tightening screw is tightened, and the tubular sleeve moves towards the body portion, the shape and taper of the tubular sleeve guides the sleeve inside (i.e. beneath) the expansion tabs.

Advantageously in some embodiments, the expansion threaded portion is cylindrical.

Advantageously in specific embodiments, the tubular body is integrally formed of a single piece of material. For example, the body of the anchor may in some examples be monoblock. This enables the tubular body to have similar properties at every point, allowing its performance across the entire tubular body to be uniform without irregularities and having portions of the tubular body being stronger or weaker than other portions.

Advantageously in certain embodiments, the expansion tabs are relatively rigid. This is particularly advantage because this limits the amount of deformation of the expansion tabs. In some examples, the rigidity of the expansion tabs can be selected depending on the desired degree of expansion or deformation of the tabs.

Advantageously in certain embodiments, the expansion tabs have a free distal end.

Advantageously in specific embodiments, the expansion anchor comprises three expansion tabs equally circumferentially spaced around the tubular sleeve. In this way, the expansion tabs are spaced about the tubular sleeve such that the tubular sleeve can engage with the wall at equally spaced points about its circumference. In some embodiments, the expansion anchor comprises two expansion tabs spaced around the tubular sleeve. In other embodiments, the expansion anchor comprises more than three expansion tabs spaced around the tubular sleeve. In specific embodiments, the expansion tabs are equally circumferentially spaced around the tubular sleeve.

Advantageously in specific embodiments, the expansion anchor comprises three deformable legs equally circumferentially spaced around the tubular sleeve. In this way, the deformable legs engage with the wall at spaced apart points about its circumference so as it improve the retention of the expansion anchor in the wall.

Advantageously in some embodiments, the expansion tabs and deformable legs are serially arranged using any number and any combination of said expansion tabs and said deformable legs about the circumference of the tubular sleeve.

Advantageously in some preferred embodiments, the deformable legs are formed with areas of weakness between the segments and between respective segments and the expansion portion and the body portion of the tubular sleeve, the areas of weakness forming bending points between two adjacent segments of the deformable legs and/or between a segment of the deformable legs and the body portion and/or the expansion portion of the tubular sleeve. Having an area or areas of weakness in this way is particularly advantageous because the deformation of the deformable legs can be controlled to deform at a predetermined location, that is, at the area(s) of weakness.

Advantageously in specific embodiments, the areas of weakness form a living hinge. Having the areas of weakness form a living hinge is particularly advantageous since durability is improved, allowing for an increased number of deformation cycles before an expansion anchor needs to be replaced.

Advantageously in some embodiments, the expansion anchor is formed from a metal. By having an expansion anchor formed from a metal, strength of the anchor is generally improved, as is the anchor's durability.

### Brief Description of the Drawings

Embodiments of the invention are now described, by way of example only, hereinafter with reference to the accompanying drawings, in which:
**Figure 1** illustrates an expansion anchor from: **(A)** a side view; and **(B)** a perspective side view;
**Figure 2** illustrates an open (i.e. unfolded) sleeve of an expansion anchor in: **(A)** a first configuration; **(B)** a second configuration; **(C)** a third configuration; and **(D)** a fourth configuration.
**Figure 3** **(A-F)** illustrates a side view of an expansion anchor operating in an expansion mode of operation;
**Figure 4** **(A-E)** illustrates a side view of an expansion anchor operating in a locking mode of operation;
**Figure 5** illustrates a perspective view of a distal end of an expansion anchor retained in a wall in an expansion mode of operation;
**Figure 6** illustrates a perspective view of a distal end of an expansion anchor retained in a wall in a locking mode of operation;
**Figure 7** illustrates a perspective view of a proximal end of an expansion anchor with a tightening screw in place;
**Figure 8** illustrates a perspective view of a proximal end of an expansion anchor in **Figure 7****,** with the tightening screw removed;
**Figure 9** illustrates a perspective view of a distal end of an expansion anchor according to a further embodiment; and
**Figure 10** illustrates a perspective detailed view of a distal end of an expansion anchor according to a still further embodiment.

### Detailed Description

The described example embodiment relates to an expansion anchor and particularly to an expansion anchor for use in the construction sector. However, the invention is not necessarily restricted expansion anchors for use in the construction sector altogether but may also be used to secure a plurality of components together.

As used herein, the phrase "area of weakness" is used to describe a region within a body or part, which has a relatively low strength compared to the surrounding region(s).

As used herein, the term "axis" is used to describe an imaginary straight line running through a centre of a body, about which the body is able to rotate. The term "axis" is also used to describe a fixed reference line, usually through the centre of a body.

As used herein, the term "deformable" is used to describe a capability of taking another form or shape.

As used herein, the term "distal" is used to generally describe a location closest to the end of the expansion anchor furthest into the hole in which the expansion anchor is inserted, and furthest away from the user when the expansion anchor is located into a hole.

As used herein, the term "longitudinal" is used to describe a direction between the proximal and distal portions of the expansion anchor. The term "longitudinal" is also used to describe a direction running lengthwise of the expansion anchor. For example, the longitudinal axis of the tubular sleeve refers to an axis running lengthwise through the tubular sleeve.

As used herein, the term "monoblock" is used to refer to a single integral component. For example, a monoblock body section is a body section that is formed integrally from a single component.

As used herein, the term "proximal" is used to generally describe a location closest to the user when the expansion anchor is located into a hole, and furthest away from the end of the expansion anchor furthest into the hole in which the expansion anchor is inserted.

As used herein, the term "radial" or "radially" is used to describe a direction that is diverging from a central reference point.

As used herein, the phrase "relatively rigid" is used to describe the lack of ability, in proportion to another member or part, to bend or otherwise be forced out of shape. The term "rigid" is used to describe a lack of deformability.

As used herein, the term "tubular" is used to describe a generally cylindrical hollow-like shaped structure.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

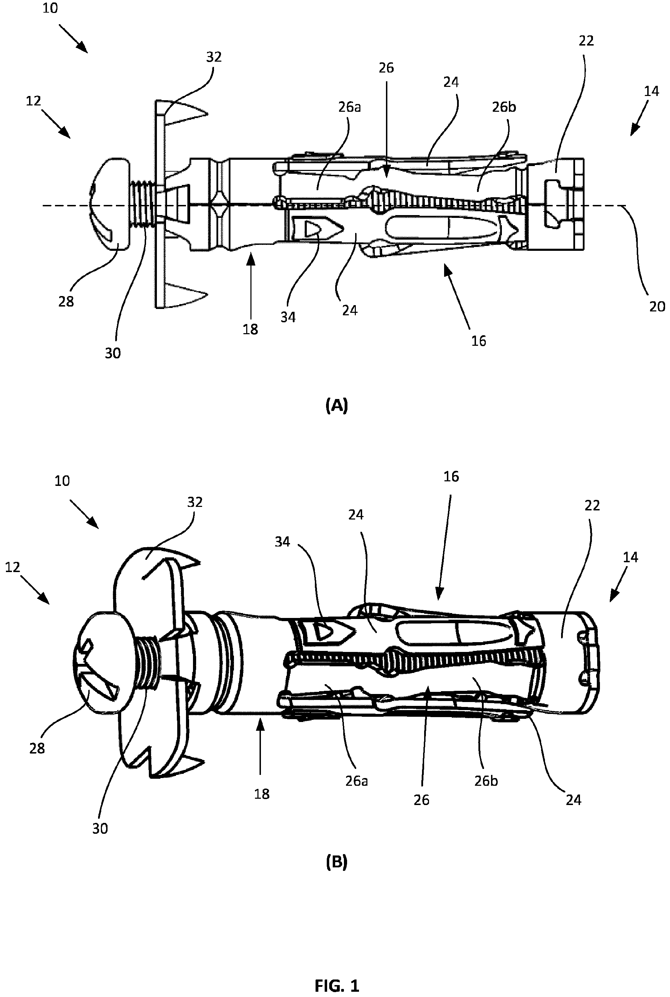

**Figure 1** shows an anchoring member, namely a medium duty expansion anchor 10 that is suitable for inserting in an anchoring hole in a support or a wall. The meaning of light duty, medium duty and high duty are all common terms in the art and would be understood within the common general knowledge of the person skilled in the art. The expansion anchor 10 has a proximal end 12 and a distal end 14, and is structured such that it may be anchored or otherwise secured to a support or wall. It is preferable that the anchoring member though not essential that the anchor 10 comprises a metal. It shall be understood that the anchor 10 may be secured to a wall having any structure. For example, the wall may be a solid structure or a non-solid structure. That is, the wall may be made from bricks, or the wall may be hollow, having defining spaces and/or a wall that is filled with a low-density material, or a non-compact wall such as a multi-layered wall or a wall made from a relatively friable material. The wall or structure may also be made from or filled with a material having a low compactness, or the wall may be made from a material of high density such as concrete or natural stone or solid bricks, for example.

Referring to **Figure 1****,** the expansion anchor 10 comprises a sleeve 16 which, in this example is tubular in shape, having a longitudinal axis 20. The anchor 10 also comprises an expansion portion 22 at the distal end 14 which, in this example, is an expansion nut 22. The anchor 10 has a tightening screw 28 having a drive head and a threaded shank 30 projecting from the bottom of the drive head in the direction of the longitudinal axis 20 towards the distal end 14 of the anchor 10. The threaded shank 30 extends through an internal hole (not shown) of the sleeve 16. That is, the threaded shank 30 extends from the bottom of the drive head of the tightening screw 28, through to the distal end 14 of the anchor. The expansion portion 22 has an internal thread which is designed to engage with the threaded shank 30 such that the expansion portion 22 can move axially along the longitudinal axis 20. The expansion portion 22 is screwed onto the distal end 14 of the shank 30. It is preferable that the expansion portion 22 is frustoconical in shape, having a taper towards the proximal end 12 of the anchor 10. Alternatively, the expansion portion may be cylindrical in shape.

The sleeve 16 is provided with a body portion 18 at a proximal end. Expansion tabs 24 are attached to the body portion 18 and extend in a direction from the body portion 18 towards the distal end 14. The tabs 24 extend in a direction that is parallel to the longitudinal axis 20. It is preferred that the expansion tabs 24 have a free distal end. As the tightening screw 28 is tightened in use, the expansion portion 22 moves axially towards the proximal end 12 of the anchor 10. This axial movement of the threaded expansion portion 22 urges the ends of the expansion tabs 24 radially outward from the longitudinal axis 20. In this example, each expansion tab 24 is provided with a number of gripping portion, namely teeth 34 which, as will be explained, are capable of gripping a surface on which the expansion tabs 24 engage. A flange 32 may be provided below the drive head of the tightening screw 28. The flange 32 is made from metal in this example and prevents the tightening screw 28 from sinking into the wall or surface that the anchor 10 is to be attached to. This will be made clearer with reference to the subsequent drawings.

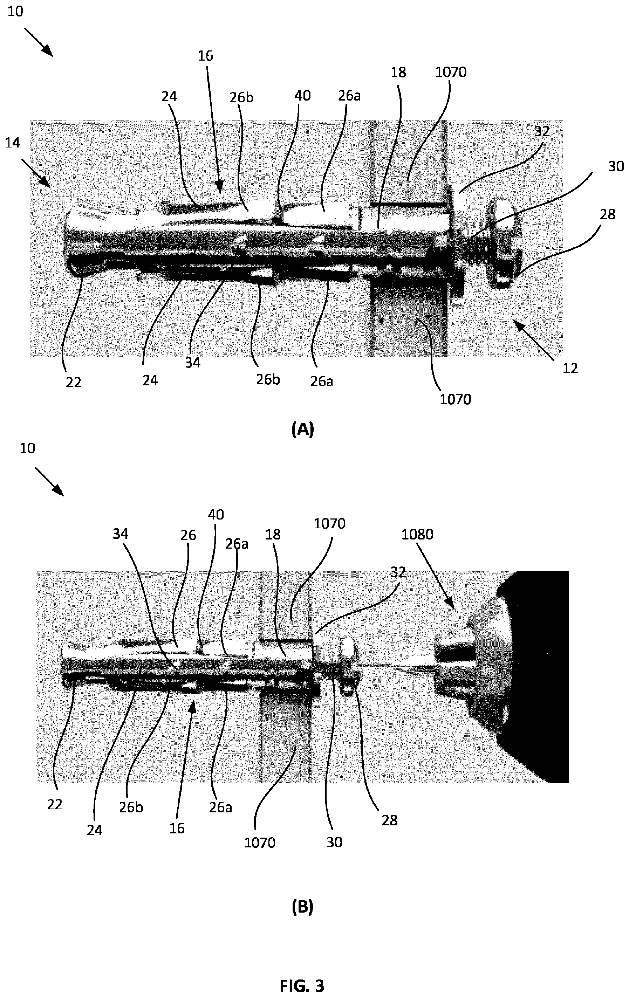

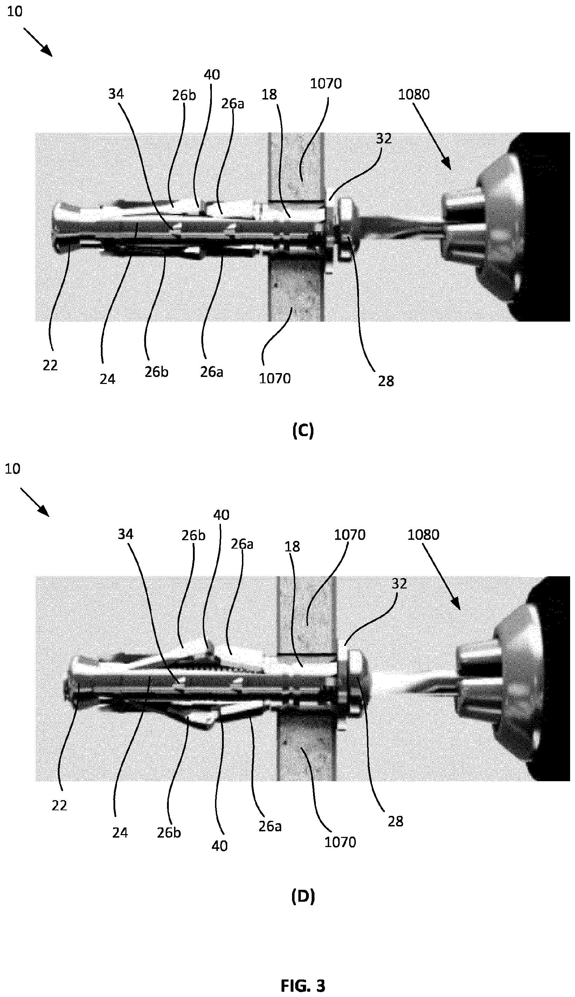

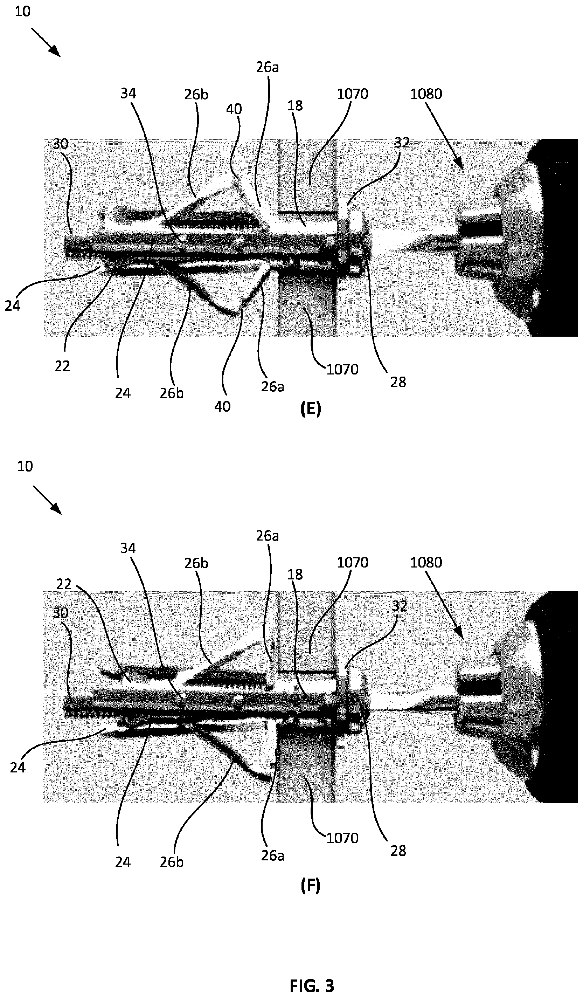

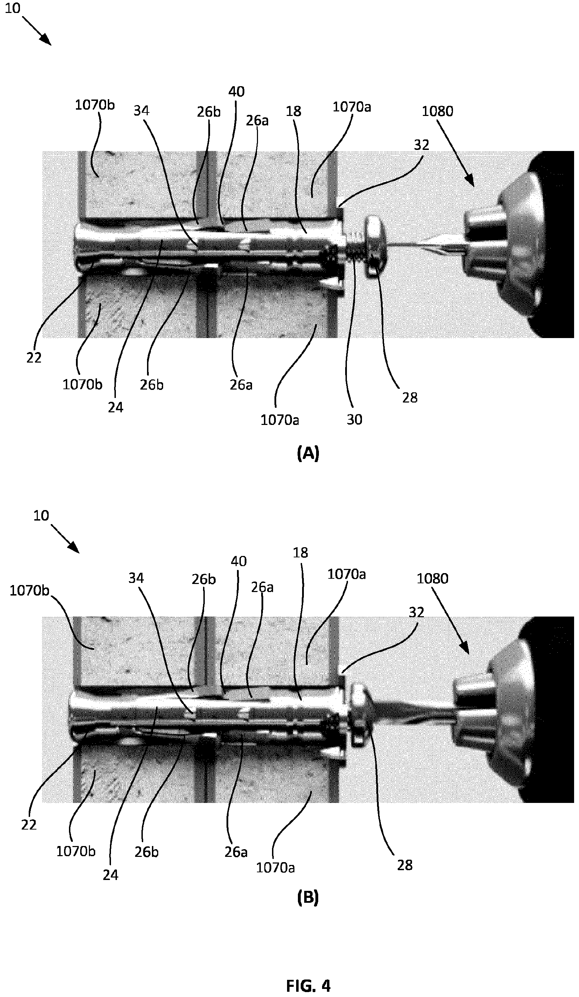

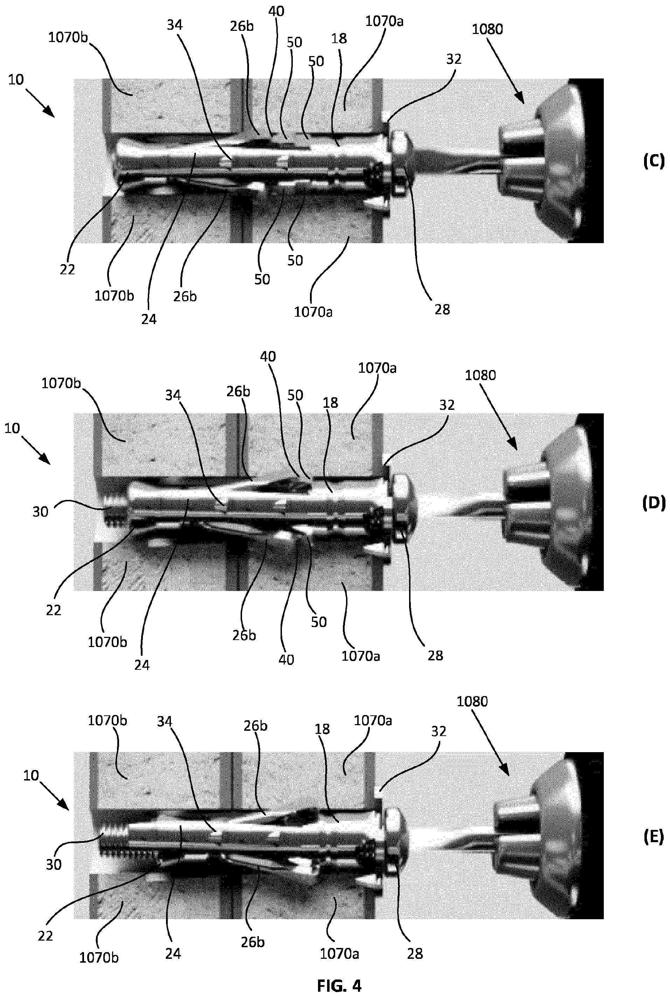

The anchor 10 is further provided with a deformable leg 26. Only one deformable leg 26 is illustrated in this example, but it should be appreciated that the anchor 10 may also be provided with further deformable legs 26 arranged around the circumference of the sleeve 16. The leg 26 extends between the body portion 18 and the expansion portion 22 of the sleeve 16. The leg 26 is attached to each of the body portion 18 and the expansion portion 22. Thus, when the expansion portion 22 moves axially along the longitudinal axis 20 towards the body portion 18 (i.e. towards the proximal end 12), a force is exerted onto the leg 26 from the distal end 14. The implications of this force exerted onto the leg 26 will be described later, particularly with reference to **Figure 3** and **Figure 4****.** The leg 26 is formed from two segments coupled to one another. More specifically, the leg 26 comprises a proximal segment 26a that is attached to the body portion 18, and a distal segment 26b which is attached to the expansion portion 22. The proximal segment 26a and the distal segment 26b are coupled to one another.

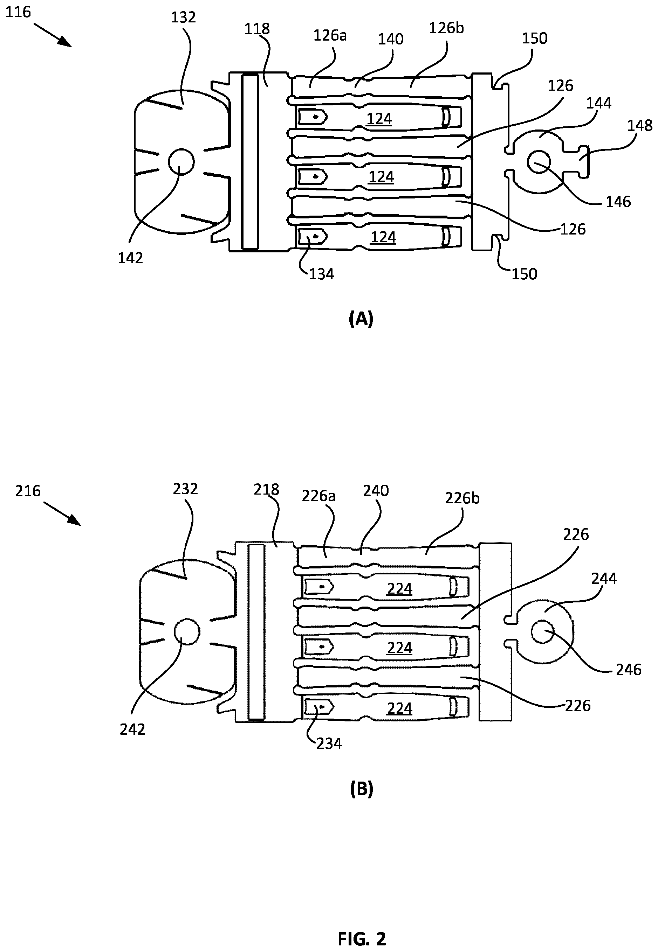

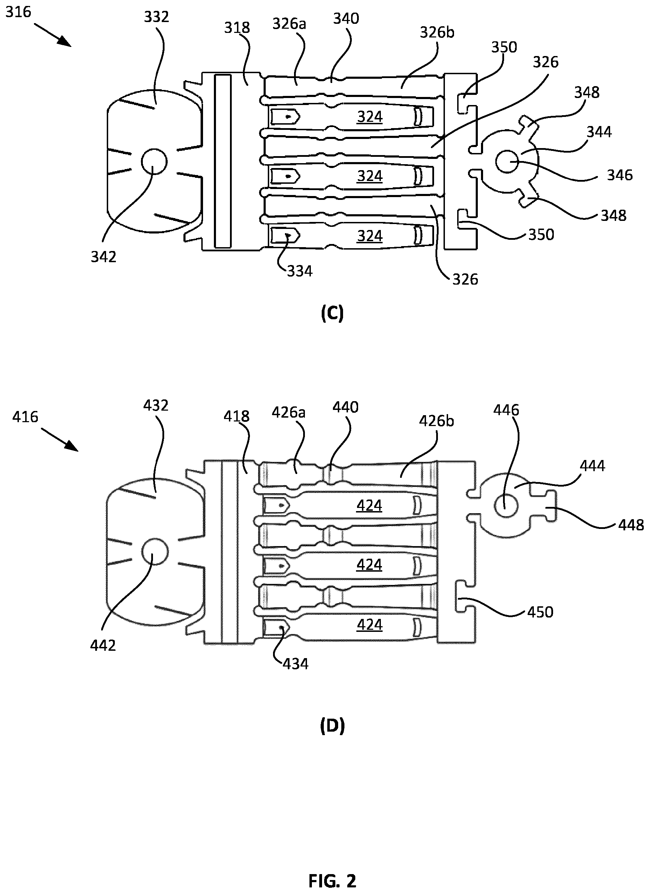

**Figure 2** shows the sleeve 116 of an expansion anchor in an open arrangement. That is, the sleeve 116 is shown in an unfolded (i.e. unrolled) state so as to illustrate the sleeve 116 in more detail. In this embodiment shown, the body 118 of the expansion anchor has three expansion tabs 124 angularly equidistant (i.e. equidistantly spaced) from one another. It shall be understood, however, that the present invention is not limited to a body 118 and sleeve 116 having three expansion tabs 124. The expansion anchor may comprise one or two expansion tabs 124, or more than three expansion tabs 124, for example. Each one of the expansion tabs 124 has a gripping portion 134 located at either end of the tab 124, that is designed to allow the expansion tabs 124 to grip a surface of a hole (not shown) in which the anchor is to be inserted.

Legs 126 are positioned in-between thee expansion tabs 124. In this particular example, they are positioned between the expansion tabs 124 such that the legs 126 and tabs 124 are sequentially positioned one after the other about the circumference of the tubular sleeve 116. However, it is envisaged that the legs 126 and tabs 124 may be arranged in other suitable ways around the circumference of the sleeve 116, such as, for example, two tabs 124 followed by two legs 126. It is further envisaged that, while in this example the ends of the legs 126 and tabs 124 are level with one another, in other examples, they may instead be axially displaced relative to one another along the longitudinal axis of the sleeve 116, for example, some of the legs 126 and/or tabs 124 may be closer to the distal end of the anchor and others may be closer to the proximal end. It should be appreciated that any number of legs 126 and tabs 124 may be provided on the expansion anchor. It should further be appreciated that the expansion anchor may have on it a number of legs 126 and tabs 124 serially arranged thereon in any pattern. For example, an expansion tab may have alternating tabs 124 and legs 126. Alternatively, the expansion tab may have a different configuration such that two deformable legs are followed by one rigid tab. Other combinations are also envisaged. Further combinations are envisaged where the body is made of more than one single part.

The deformable legs 126 shown in **Figure 2** (A) comprise two segments coupled to one another. That is, each leg 126 comprises a proximal segment 126a and a distal segment 126b which are coupled to one another. In this particular example, an area of weakness 140 is positioned in-between the proximal segment 126a and the distal segment 126b. The area of weakness 140 has a smaller width than the segments 126a,126b. Also, the transitional portion between the area of weakness 140 and each of the segments 126a,126b has a reduced width. Thus, when a force is applied from the end of the deformable leg 126, less force is required to cause the legs 126 to deform at the respective area of weakness 140. In alternative examples, other areas of weakness may be provided between the legs 126 and the body portion 118, between the legs and the expansion portion (not shown), or on the expansion tabs 124, for example. Areas of weakness are provided to control the portions at which the legs 126 and/or the tabs 124 are intended to bend. In this particular example, the areas of weakness form a living hinge between the proximal 126a and distal 126b segments. That is, the areas of weakness are thin materials integral with and made from the same material as the proximal 126a and distal 126b segments.

The flange 132 on the proximal side is provided with a proximal end aperture 142, configured to receive the shank (not shown) of the tightening screw (not shown). On the distal side, there is provided a distal flange 144 having a generally circular profile corresponding to the tubular body portion 118. The distal flange 144 comprises a distal aperture 146, which is threaded and through which the shank (not shown) of the tightening screw (not shown) is screwed.

In a first configuration, exemplified in **Figure 2 (A)**, a protruding portion 148 is also provided. The protruding portion 148 is integral with and extends from the distal flange 144 towards the distal direction. The sleeve 116 of the anchor **100** is formed as a monoblock, folded (i.e. wrapped) around the shank of a tightening screw (not shown). When the sleeve 116 is formed, the protruding portion 148 is engages with receiving portions 150 so as to retain the shape of the sleeve 116. In the configuration exemplified in **Figure 2 (B)**, the distal flange 244 does not have a protruding portion and the sleeve 216 does not have any receiving portions. The sleeve 216 in **(B)** is held together by welding. In the configuration exemplified in **Figure 2 (C)****,** the distal flange 344 is provided with two separate protruding portions 348 spaced apart from one another. Each protruding portion 348 is held in a receiving portion 350 of the sleeve 316 to retain the shape of the sleeve 316 when formed. Lastly, in the configuration exemplified in **Figure 2 (D)****,** the distal flange 444 is provided in an off-centre location (i.e. towards the edge of the sleeve). The distal flange 444 is provided with a single protruding portion 448. A receiving portion 450 is provided off-centre on the other side of the sleeve, such that when the sleeve 416 is folded (wrapped) around the shank, the protruding portion 448 is held in the receiving portion 450 of the sleeve 416 to retain the shape of the sleeve 416 when formed. Thus, in each of the exemplary embodiments shown in **Figure 2****,** the body 118, 218, 318, 418 is formed of a single piece of material, preferably metal. In some examples, the expansion tabs 124, 224, 324, 424 comprise a relatively rigid material that is more rigid than, for example, the deformable legs 126, 226, 326, 426. The central portion of the body portion 118, 218, 318, 418 is rolled up or otherwise folded into a cylindrical form. The ends of the body portion 118, 218, 318, 418 are folded inwards to form the ends of the body 118, 218, 318, 418 and the shape is held in place using any one of the aforementioned retention member as exemplified in **(A), (B), (C)** and **(D).** Additionally, it is envisaged that in some specific examples, the expansion portion may also be formed as part of the monobloc, i.e. formed integral with the rest of the body portion 118.

**Figure 3** shows an expansion anchor 10 inserted into a wall 1070. The expansion anchor 10 is substantially the same as the anchor 10 in **Figure 1** so will not be described again in detail. Referring firstly to **Figure 3 (A)****,** the anchor 10, as illustrated, is inserted into the wall 1070. More specifically, the distal end 14 of the anchor 10 is inserted into a hole of the wall 1070 and retained in place by the sink-prevention flange 32, such that the flange 32 lies flush against a front facing surface of the wall 1070. The wall in this example is a relatively thin concrete wall.

Referring now to **Figure 3 (B)****,** a power drill 1080 bit is inserted into the drive head of the tightening screw 28. **Figure 3 (C)** shows the tightening of the tightening screw 28 by actuation of the power drill 1080. It should be appreciated that the tightening of the tightening screw 28 can be by any other suitable means, such as using a manual screwdriver, for example. As the tightening screw 28 is tightened, the drive head of the screw 28 moves towards the flange 32 and the screw 28 moves further into the sleeve 16.

The expansion mode of operation will now be described with reference particularly to **Figures 3 (D)****,** **(E)** and **(F).** Referring firstly to **Figures 3 (D)**, the tightening screw 28 is flush against the surface of the flange 32. As the screw 28 is screwed further in, the screw 28 is prevented by the flange 32 from moving further along the longitudinal axis towards the distal end. The internal thread of the expansion portion 22 engages with the threads on the tightening screw 32, moving the expansion portion 22 along the longitudinal axis in the direction towards the proximal end of the anchor 10.

As the expansion portion 22 moves along the longitudinal axis in the direction of the proximal end of the anchor 10, the expansion portion 22 exerts a force onto the deformable leg 26. More specifically, a force is exerted by the expansion portion 22 onto the distal segment 26b of the deformable leg 26. Since the expansion anchor 10 in this case is inserted into a relatively thin wall, the deformable leg 26 will be outside the hole in the wall. The force exerted by the expansion portion 22 onto the deformable leg 26 urges the distal segment 26b radially outward of the longitudinal axis. It should be appreciated that the expansion anchor 10 is inserted into a thin wall, however, the anchor 10 may also operate in the expansion mode in a wall made of a material comprising relatively friable material, or having a low density, for example. As the expansion portion 22 pushes onto the deformable leg 26, the proximal segment 26a also pushes onto the body portion 18 of the anchor 10. This also urges the proximal segment 26a of the deformable leg 26 radially outward of the longitudinal axis. The deformable leg 26, in this example, has an area of weakness between the proximal 26a and distal 26b segments, such that bending of the leg 26 occurs at the area of weakness, positioned midway between the two segments 26a,26b. In this particular example, the areas of weakness are living hinges.

Referring now to **Figure 3 (E)****,** the tightening screw 32 continues to be rotated (i.e. screwed) which moves the expansion anchor 22 further towards the distal end of the anchor 10. This movement urges the proximal 26a and distal 26b segments radially outward relative to the longitudinal axis. Since the deformable legs 26 are positioned outside the wall 1070, the radial displacement of the deformable legs 26 retains the length of the proximal 26a and distal 26b segments. As shown in **Figure 3 (F),** the deformable legs 26 expand until the proximal segment 26a expands to be flush against the wall 1070 in which the expansion anchor 10 is retained. At this point, the proximal segment 26a of the deformable leg 26 extends substantially perpendicularly to the longitudinal axis of the anchor 10. Also shown is the urging outward of the expansion tabs 24 as the expansion portion 22 is moved along the longitudinal axis towards the proximal end of the anchor 10.

**Figure 4** shows an anchor 10 inserted into a wall 1070. An expansion anchor 10 is inserted into a wall 1070 having a proximal wall portion 1070a and a distal wall portion 1070b. The expansion anchor 10 is substantially the same as the anchor 10 in **Figure 1** and the anchor 10 in **Figure 3** and is therefore not described in any detail. Referring firstly to **Figure 4 (A)****,** the anchor 10 as illustrated is inserted into a relatively thick wall 1070 (i.e. the wall thickness is substantially the same as the length of the anchor 10). To exemplify the locking mode of operation, **Figure 4** illustrates the expansion anchor 10 inserted into the wall 1070 consisting of a proximal wall portion 1070a and a distal wall portion 1070b which together, have a length (i.e. a thickness) substantially the same as the length of the anchor 10. More specifically, when the distal end 14 of the anchor 10 is inserted into a hole of the wall 1070 and retained in place by the sink-prevention flange 32, the distal end of the anchor 10 lies substantially flush with the rear surface of the distal wall portion 1070b.

Referring now to **Figure 4 (B)****,** a power drill 1080 bit is inserted in the drive head of the tightening screw 28. The actuation of the power drill 1080 tightens the tightening screw 28. It is envisaged that the tightening of the tightening screw 28 can be by any other means, such as using a manual screwdriver, for example. As the tightening screw 28 tightens, the drive head of the screw 28 moves towards the flange 32 and the screw 28 moves further into the sleeve 16.

The locking mode of operation will now be described with reference particularly to **Figures 4 (C), (D)** and **(E)****.** Referring firstly to **Figure 4 (C)****,** the tightening screw 28 is flush against the surface of the flange 32. As the screw 28 is screwed further in, the screw 28 is prevented by the flange 32 from moving past the front surface of the proximal wall portion 1070a. The internal thread of the expansion portion 22 engages with the threads on the tightening screw 32, moving the expansion portion 22 along the longitudinal axis in the direction towards the proximal end of the anchor 10.

As the expansion portion 22 moves along the longitudinal axis in the direction of the proximal end of the anchor 10, the expansion portion 22 exerts a force onto the deformable leg 26. More specifically, a force is exerted by the expansion portion 22 onto the distal segment 26b of the deformable leg 26. The expansion anchor 10 in this example is inserted into a wall having a relatively high thickness. In such instance, the deformable leg 26 is inside of the wall (i.e. not in a hollow section of wall, not outside the wall). The force exerted by the expansion portion 22 onto the deformable leg 26 causes a force to be transferred to the proximal segment 26a. This causes the proximal segment 26a of the deformable leg 26 to crumple. More specifically, the proximal segment 26a under force becomes shorter in length. It is also envisaged that in other examples, the distal segment 26b crumples and becomes shorter in length instead of collapsing and folding into sub-segments. In this example, the proximal segment 26a becomes shorter and increases in radial thickness relative to the longitudinal axis. It should be appreciated that although in this example the expansion anchor 10 is inserted into a thick wall 1070, the anchor 10 may also operate in the expansion mode in a wall made of a material comprising a compact material or a material of high density, for example.

Referring now to **Figure 4 (D)****,** as the expansion portion 22 pushes further onto the deformable leg 26, the proximal segment 26a pushes onto the body portion 18 of the anchor 10, crumpling the proximal segment 26a even more. This begins to urge the distal segment 26b of the deformable leg 26 radially outward over the proximal segment 26a relative to the longitudinal axis. The deformable leg 26 in this example has an area of weakness between the proximal 26a and distal 26b segments, such that bending and/or crumpling of the proximal segment 26a occurs at the area of weakness.

Referring now to **Figure 4 (E)****,** the tightening screw 32 continues to be rotated (i.e. screwed) which moves the expansion anchor 22 further towards the distal end of the anchor 10. This movement urges the distal segment 26b towards the proximal end of the anchor 10 , as well as, radially outward relative to the longitudinal axis, covering the proximal segment 26a. Since the deformable legs 26 are positioned inside the wall 1070, the deformable legs 26 are unable to expand fully to radially displace outward relative to the longitudinal axis. However, the crumpling of the proximal segment 26a allows the distal segment 26b to displace slightly in the radial direction to retain (i.e. wedge) the expansion anchor 10 in the wall 1070. Also, the movement of the expansion portion 22 along the longitudinal axis towards the proximal end of the anchor 10 urges the expansion tabs 22 outward to grip the inner surface of the wall 1070. The provision of gripping portions 34 on the tabs 24 further improve the grip of the tabs 24.

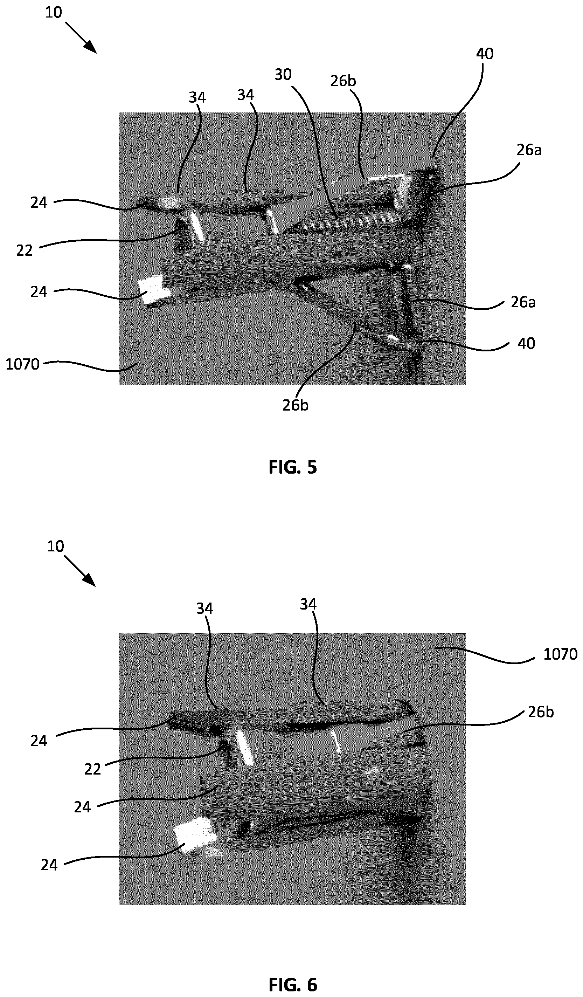

**Figure 5** shows the distal end of an anchor 10 in the expansion mode of operation. The anchor 10 protrudes from a rear surface of a wall 1070. In the expanded state, the proximal segment 26a is flush against the wall in which the expansion anchor 10 is retained. As shown, the proximal segment 26a of the deformable leg 26 extends substantially perpendicularly to the longitudinal axis of the anchor 10. Also shown is the urging outward of the expansion tabs 24 as the expansion portion 22 is moved along the longitudinal axis towards the proximal end of the anchor 10. It is envisaged that in other examples, the expansion anchor 10 is retained in a wall having a low density or made of a relatively friable material. Thus, the gripping portions 34 of the expansion tabs 34 grip onto the wall 1070 to further improve retention therein.

**Figure 6** shows a distal end of an anchor 10 in the locking mode of operation. The anchor 10 protrudes from a rear surface of a wall 1070. In this example, the deformable legs 26 of the anchor 10 are held inside the wall, precluding the expansion of the legs 26 radially outward. The movement of the expansion portion 22 along the longitudinal axis towards the proximal end of the anchor 10 urges the expansion tabs 24 radially outward to engage with the wall. In this particular example, the expansion tabs 24 are provided with gripping portions 34 which further increase the retention of the anchor 10 with the wall 1070. Though not explicitly shown in **Figure 6****,** the proximal segment 26a crumbles under the force exerted by the expansion portion 22, increasing the radially thickness of the proximal segment 26a to retain the anchor 10 in the wall. Also, it is to be appreciated that in some examples, the expansion portion 22 moves further along towards the proximal end of the anchor so as to urge the distal segment 26b of the deformable leg 26, further improving retention of the anchor 10 in the wall 1070.

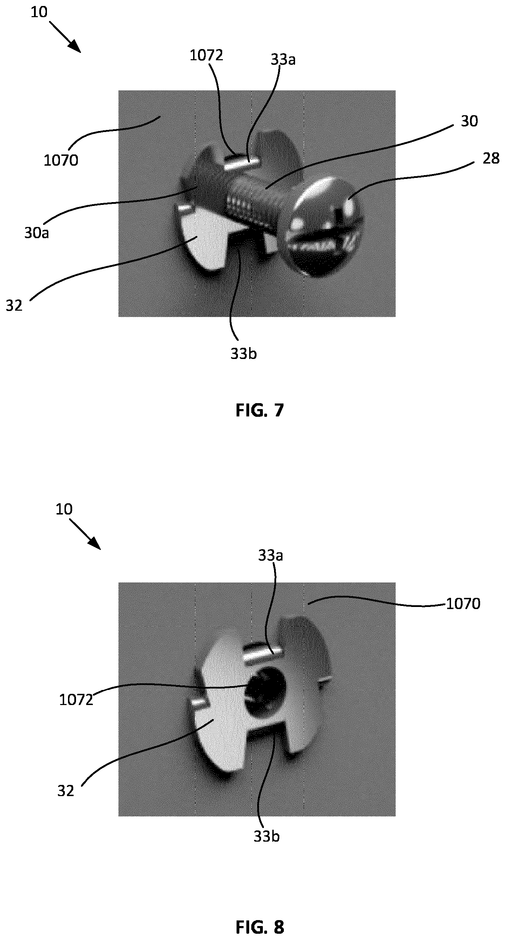

**Figure 7** shows a proximal end of an anchor 10 protruding from a front surface of a wall 1070. Once the expansion anchor 10 has expanded in either the expansion mode of operation or the locking mode of operation, as hereinbefore described, the anchor 10 is retained inside a hole 1072 in the wall 1070. **Figure 8** shows an anchor 10 where the tightening screw is removed, e.g. using a power drill, a screwdriver, or another tool. The anchor 10 remains retained in the wall 1070. Components desired to be attached to the wall, such as screens or paintings for example, can then be attached to the wall 1070 via the tightening screw 28. The flange 32 is provided with cutouts 33a, 33b that a user can engage with in order to grip the tightening screw 28 to insert or remove the screw 28 into and from the hole 1072 in the wall 1072, respectively.

Various modifications to the detailed designs described above are envisaged. For example, an additional spur may be provided at the distal end of the anchor. The spur attaches the anchor to an external metal strip. An additional row of anchors may be provided to the external metal strip, mirroring the first row of anchors. In this way, the distal end of the anchors are connected to the external metal strip via spurs. Additionally, an additional metal strip may be provided to retain the additional row of anchors. These anchors are attached to the additional metal strip via spurs provided at the proximal end of the anchor.

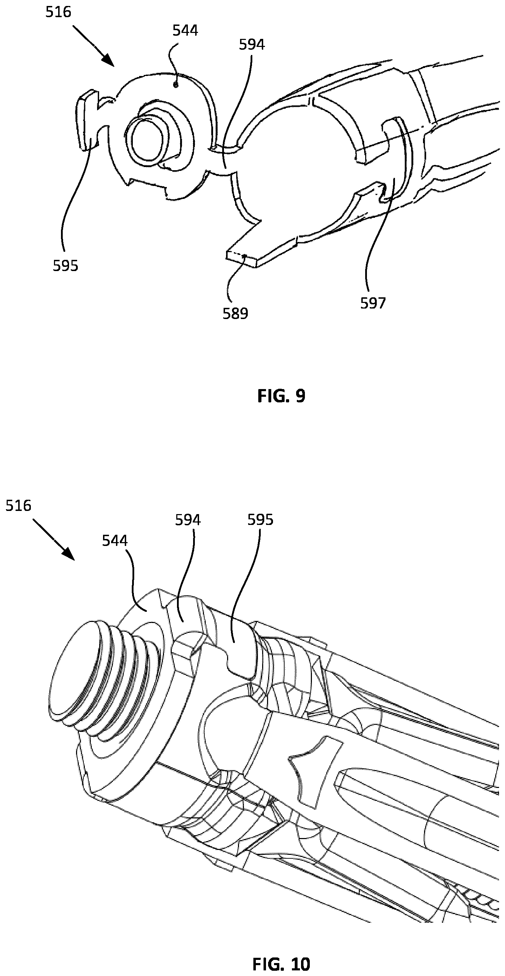

Referring to **Figure 9****,** the distal end of the anchor 516 is provided with a foldable joint 594. The foldable joint connects distal flange 544 to the rest of the sleeve. The distal flange 544 has a catch member 595 that is integral with the distal flange 544. The spur 589 provided on the distal end of the anchor 516 is integrally connected to the anchor 516. This forms an axis in which the joint 594 and spur 589 are separated by an angle of 90°. The locking configuration provided by the joint reinforces the structure of the flange-end of the anchor. This provides an increased resistance to potential opening of the sleeve. **Figure 10** shows the anchor 516 in a closed (i.e. locked) position. In the closed position, the distal flange 544 hinges onto the distal end opening of the anchor 516. The catch member 595 engages an opening 597 in the sleeve to locate the catch member 595 so as to maintain the distal flange 544 in the closed position.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. An expansion anchor (10) comprising:
a tubular sleeve (16) having a longitudinal axis (20) and comprising an expansion portion (22) at a distal end, a body portion (18) at a proximal end and expansion tabs (24) attached to the body portion and extending towards the distal end;
a tightening screw (28) configured to move the expansion portion along said longitudinal axis inside the expansion tabs so as to expand the tabs radially outwardly relative to the longitudinal axis; and
at least one deformable leg (26) extending between and attached to the body portion and to the expansion portion of the tubular sleeve, the deformable leg comprising at least two coupled segments, a distal segment (26b) attached to the expansion portion and a proximal segment (26a) attached to the body portion,
wherein the expansion anchor is operable in first and second modes of operation by movement of the expansion portion of the sleeve along the longitudinal axis, in the first mode the movement causing both the distal and proximal segments of the deformable leg to retain their length and to be radially outwardly displaced relative to the longitudinal axis,
**characterised in that** in the second mode the movement causing one of the proximal or the distal segment (26b, 26a) of the deformable leg (26) to collapse to a shorter length in the direction of the longitudinal axis (20).

2. An expansion anchor (10) according to claim 1, wherein the one of the proximal or the distal segment (26b, 26a) of the deformable leg (26) collapses by folding into sub-segments.

3. An expansion anchor (10) according to any one of claims 1 to 2, wherein shorting of the proximal or distal segment (26b, 26a) increases its radial thickness relative to the longitudinal axis (20) which in turn causes the other of the proximal or distal segment to move radially outwardly relative to the longitudinal axis as the expansion portion (22) moves along the longitudinal axis.

4. An expansion anchor (10) according to any one of claims 1 to 3, wherein the expansion portion (22) is frustoconical and tapered towards the proximal end of the tubular sleeve (16).

5. An expansion anchor (10) according to any one of claims 1 to 3, wherein the expansion portion (22) is cylindrical.

6. An expansion anchor (10) according to any one of claims 1 to 5, wherein the tubular sleeve (16) is integrally formed of a single piece of material.

7. An expansion anchor (10) according to any one of claims 1 to 6, wherein the expansion tabs (24) are relatively rigid.

8. An expansion anchor (10) according to any one of claims 1 to 7, wherein the expansion tabs (24) have a free distal end.

9. An expansion anchor (10) according to any one of the preceding claims, comprising at least two expansion tabs (14) equally circumferentially spaced around the tubular sleeve (16).

10. An expansion anchor (10) according to any one of the preceding claims, comprising three deformable legs (26) equally circumferentially spaced around the tubular sleeve (16).

11. An expansion anchor (10) according to any one of the preceding claims, wherein the expansion tabs (24) and deformable legs (26) are serially arranged using any number and any combination of said expansion tabs and said deformable legs, about the circumference of the tubular sleeve (16).

12. An expansion anchor (10) according to any one of the preceding claims, wherein the deformable legs (26) are formed with areas of weakness between the segments and between respective segments and the expansion portion (22) and the body portion (18) of the tubular sleeve (16), the areas of weakness forming bending points between adjacent segments of the deformable legs and/or between a segment of the deformable legs and the body portion and/or the expansion portion of the tubular sleeve.

13. An expansion anchor (10) according to claim 12, wherein the areas of weakness form a living hinge.

14. An expansion anchor (10) according to any one of the preceding claims, formed from metal.

## Patentansprüche

1. Spreizdübel (10), Folgendes aufweisend:
eine rohrförmige Hülse (16), aufweisend eine Längsachse (20) und einen Spreizabschnitt (22) an einem distalen Ende und einen Körperabschnitt (18) an einem proximalen Ende und Spreizlaschen (24), die an dem Körperabschnitt angebracht sind und sich zu dem distalen Ende hin erstrecken;
eine Festspannschraube (28), die derart eingerichtet ist, dass sie den Spreizabschnitt entlang der Längsachse innerhalb der Spreizlaschen bewegt, um die Laschen in Bezug auf die Längsachse radial nach außen zu expandieren; und
mindestens einen verformbaren Schenkel (26), der sich zwischen dem Körperabschnitt und dem Spreizabschnitt der rohrförmigen Hülse erstreckt und an diesen befestigt ist, der verformbare Schenkel aufweisend mindestens zwei gekoppelte Segmente, ein distales Segment (26b), das an dem Spreizabschnitt befestigt ist, und ein proximales Segment (26a), das an dem Körperabschnitt befestigt ist,
wobei der Spreizdübel in einem ersten und zweiten Betriebsmodus durch eine Bewegung des Spreizabschnitts der Hülse entlang der Längsachse betreibbar ist, wobei in dem ersten Betriebsmodus die Bewegung veranlasst, dass sowohl das distale als auch das proximale Segment des verformbaren Schenkels ihre Länge beibehalten und in Bezug auf die Längsachse radial nach außen verschoben werden,
**dadurch gekennzeichnet, dass** in dem zweiten Modus die Bewegung veranlasst, dass eines von dem proximalen oder dem distalen Segment (26b, 26a) des verformbaren Schenkels (26) auf eine kürzere Länge in Richtung der Längsachse (20) zusammenklappt.

2. Spreizdübel (10) nach Anspruch 1, wobei das eine des proximalen oder distalen Segments (26b, 26a) des verformbaren Schenkels (26) durch Falten in Untersegmente zusammenklappt.

3. Spreizdübel (10) nach einem der Ansprüche 1 bis 2, wobei das Verkürzen des proximalen oder distalen Segments (26b, 26a) dessen radiale Dicke in Bezug auf die Längsachse (20) erhöht, was wiederum veranlasst, dass sich das andere des proximalen oder distalen Segments in Bezug auf die Längsachse radial nach außen bewegt, wenn sich der Spreizabschnitt (22) entlang der Längsachse bewegt.

4. Spreizdübel (10) nach einem der Ansprüche 1 bis 3, wobei der Spreizabschnitt (22) kegelstumpfförmig ist und sich zu dem proximalen Ende der rohrförmigen Hülse (16) hin verjüngt.

5. Spreizdübel (10) nach einem der Ansprüche 1 bis 3, wobei der Spreizabschnitt (22) zylindrisch ist.

6. Spreizdübel (10) nach einem der Ansprüche 1 bis 5, wobei die rohrförmige Hülse (16) einstückig aus einem einzigen Materialstück gebildet ist.

7. Spreizdübel (10) nach einem der Ansprüche 1 bis 6, wobei die Spreizlaschen (24) relativ starr sind.

8. Spreizdübel (10) nach einem der Ansprüche 1 bis 7, wobei die Spreizlaschen (24) ein freies distales Ende aufweisen.

9. Spreizdübel (10) nach einem der vorhergehenden Ansprüche, aufweisend mindestens zwei Spreizlaschen (14), die gleichmäßig um den Umfang der rohrförmigen Hülse (16) verteilt sind.

10. Spreizdübel (10) nach einem der vorhergehenden Ansprüche, aufweisend drei verformbare Schenkel (26), die gleichmäßig um den Umfang der rohrförmigen Hülse (16) verteilt sind.

11. Spreizdübel (10) nach einem der vorhergehenden Ansprüche, wobei die Spreizlaschen (24) und die verformbaren Schenkel (26) unter Verwendung einer beliebigen Anzahl und einer beliebigen Kombination der Spreizlaschen und der verformbaren Schenkel um den Umfang der rohrförmigen Hülse (16) in Reihe angeordnet sind.

12. Spreizdübel (10) nach einem der vorhergehenden Ansprüche, wobei die verformbaren Schenkel (26) mit Schwächungsbereichen zwischen den Segmenten und zwischen jeweiligen Segmenten und dem Spreizabschnitt (22) und dem Körperabschnitt (18) der rohrförmigen Hülse (16) ausgebildet sind, wobei die Schwächungsbereiche Biegepunkte zwischen benachbarten Segmenten der verformbaren Schenkel und/oder zwischen einem Segment der verformbaren Schenkel und dem Körperabschnitt und/oder dem Spreizabschnitt der rohrförmigen Hülse bilden.

13. Spreizdübel (10) nach Anspruch 12, wobei die Schwächungsbereiche ein Filmscharnier bilden.

14. Spreizdübel (10) nach einem der vorhergehenden Ansprüche, der aus Metall gebildet ist.

## Revendications

1. Cheville à expansion (10) comprenant :
un manchon tubulaire (16) ayant un axe longitudinal (20) et comprenant une portion d'expansion (22) au niveau d'une extrémité distale, une portion corps (18) au niveau d'une extrémité proximale et des pattes d'expansion (24) fixées à la portion corps et s'étendant vers l'extrémité distale ;
une vis de serrage (28) configurée pour mettre en mouvement ladite portion d'expansion le long dudit axe longitudinal à l'intérieur des pattes d'expansion de manière à élargir les pattes radialement vers l'extérieur par rapport à l'axe longitudinal ; et
au moins une patte déformable (26) s'étendant entre, et fixée à, la portion corps et à la portion d'expansion du manchon tubulaire, la patte déformable comprenant au moins deux segments couplés, un segment distal (26b) fixé à la portion d'expansion et un segment proximal (26a) fixé à la portion corps,
dans laquelle la cheville à expansion peut fonctionner selon un premier et un deuxième mode de fonctionnement par mouvement de la portion d'expansion du manchon le long de l'axe longitudinal, dans le premier mode le mouvement amenant à la fois les segments distal et proximal de la patte déformable à conserver leur longueur et à être déplacés radialement vers l'extérieur par rapport à l'axe longitudinal,
**caractérisée en ce que**, dans le deuxième mode, le mouvement amène l'un parmi le segment proximal ou le segment distal (26b, 26a) de la patte déformable (26) à s'affaisser jusqu'à une longueur plus courte dans la direction de l'axe longitudinal (20).

2. Cheville à expansion (10) selon la revendication 1, dans laquelle l'un parmi le segment proximal ou le segment distal (26b, 26a) de la patte déformable (26) s'affaisse par pliage en sous-segments.

3. Cheville à expansion (10) selon l'une quelconque des revendications 1 à 2, dans laquelle le raccourcissement du segment proximal ou distal (26b, 26a) augmente son épaisseur radiale par rapport à l'axe longitudinal (20), ce qui, à son tour, amène un mouvement radial vers l'extérieur de l'autre parmi le segment proximal ou distal par rapport à l'axe longitudinal lors du mouvement de la portion d'expansion (22) le long de l'axe longitudinal.

4. Cheville à expansion (10) selon l'une quelconque des revendications 1 à 3, dans laquelle la portion d'expansion (22) est tronconique et effilée vers l'extrémité proximale du manchon tubulaire (16).

5. Cheville à expansion (10) selon l'une quelconque des revendications 1 à 3, dans laquelle la portion d'expansion (22) est cylindrique.

6. Cheville à expansion (10) selon l'une quelconque des revendications 1 à 5, dans laquelle le manchon tubulaire (16) est formé intégralement d'une seule pièce de matériau.

7. Cheville à expansion (10) selon l'une quelconque des revendications 1 à 6, dans laquelle les pattes d'expansion (24) sont relativement rigides.

8. Cheville à expansion (10) selon l'une quelconque des revendications 1 à 7, dans laquelle les pattes expansibles (24) ont une extrémité distale libre.

9. Cheville à expansion (10) selon l'une quelconque des revendications précédentes, comprenant au moins deux pattes d'expansion (14) espacées de manière circonférentielle égale autour du manchon tubulaire (16).

10. Cheville à expansion (10) selon l'une quelconque des revendications précédentes, comprenant trois pattes déformables (26) espacées de manière circonférentielle égale autour du manchon tubulaire (16).

11. Cheville à expansion (10) selon l'une quelconque des revendications précédentes, dans laquelle les pattes d'expansion (24) et les pattes déformables (26) sont agencées en série en utilisant un nombre quelconque et une combinaison quelconque desdites pattes d'expansion et desdites pattes déformables, autour de la circonférence du manchon tubulaire (16).

12. Cheville à expansion (10) selon l'une quelconque des revendications précédentes, dans laquelle les pattes déformables (26) sont formées avec des zones de faiblesse entre les segments et entre les segments respectifs et la portion d'expansion (22) et la portion corps (18) du manchon tubulaire (16), les zones de faiblesse formant des points de flexion entre des segments adjacents des pattes déformables et/ou entre un segment des pattes déformables et la portion corps et/ou la portion d'expansion du manchon tubulaire.

13. Cheville à expansion (10) selon la revendication 12, dans laquelle les zones de faiblesse forment une charnière souple.

14. Cheville à expansion (10) selon l'une quelconque des revendications précédentes, formée en métal.
